# EUROPÄISCHE PATENTSCHRIFT

(11) **EP 1 666 849 B1**
(45) Veröffentlichungstag und Bekanntmachung des Hinweises auf die Patenterteilung: **05.03.2008**
(21) Anmeldenummer: 05022418.7
(22) Anmeldetag: 14.10.2005
(51) Int. Cl.: G01F 1/58

(54) **Magnetisch-induktives Durchflussmessgerät und Herstellungsverfahren für ein magnetisch-induktives Durchflussmessgerät**
Electro-magnetic flowmeter and method for its manufacture
Débimètre électro-magnétique et sa méthode de fabrication

(30) Priorität: 02.12.2004 DE 102004058294; 27.12.2004 DE 102004063617
(43) Veröffentlichungstag der Anmeldung: 07.06.2006
(73) Patentinhaber: Krohne AG, 4019 Basel (CH)
(72) Erfinder: Heijnsdijk, Mamix Alexander, 3356 BW Papendrecht (NL); van Willigen, Arnoud Leendert, 2901 KC Capelle a/d Ijssel (NL); Lodge, Graham Roderick, Needingworth, Cambs PE27 4SH (GB); Johnson, Paul Anthony, Cherry Hinton, Cambridge CB1 9LY (GB)
(74) Vertreter: Gesthuysen, von Rohr & Eggert

(56) Entgegenhaltungen:
- EP-A- 0 555 493
- EP-A- 1 431 716
- US-A- 5 280 727
- US-A- 5 307 687

## Beschreibung

Die Erfindung betrifft ein magnetisch-induktives Durchflußmeßgerät nach dem Oberbegriff des Patentanspruchs 1.

Magnetisch-induktive Durchflußmeßgeräte und Herstellungsverfahren für magnetisch-induktive Durchflußmeßgeräte sind aus dem Stand der Technik gut bekannt, wozu exemplarisch verwiesen wird auf "K. W. Bonfig, Technische Durchflußmessung, dritte Auflage, Vulkan-Verlag Essen, 2002, S. 123 - 167". Das grundlegende Prinzip eines magnetisch-induktiven Durchflußmeßgeräts für strömende Medien geht zurück auf Faraday, der im Jahre 1832 vorgeschlagen hat, das Prinzip der elektrodynamischen Induktion zur Strölnungsgeschwindigkeitsmessung anzuwenden. Nach dem Faradayschen Induktionsgesetzt entsteht in einem strömenden Medium, das Ladungsträger mit sich führt und durch ein Magnetfeld hindurchfließt, eine elektrische Feldstärke senkrecht zur Strömungsrichtung und senkrecht zum Magnetfeld. Das Faradaysche Induktionsgesetzt wird bei einem magnetisch-induktiven Durchflußmeßgerät dadurch ausgenutzt, daß mittels einer Magnetfeldeinrichtung, wenigstens enthaltend einen Magneten mit typischerweise zwei Magnetspulen, ein Magnetfeld erzeugt und über die Querschnittsfläche der Meßleitung geführt wird, welches Magnetfeld eine Magnetfeldkomponente aufweist, die senkrecht zur Strömungsrichtung verläuft. Innerhalb dieses Magnetfelds liefert jedes sich durch das Magnetfeld bewegende und eine gewisse Anzahl von Ladungsträgern aufweisende Volumenelement des strömenden Mediums mit der in diesem Volumenelement entstehenden Feldstärke einen Beitrag zu einer über die Elektroden abgreifbaren Meßspannung. Ein besonderes Merkmal der magnetisch-induktiven Durchflußmeßgeräte ist dabei die Proportionalität zwischen der Meßspannung und der über den Querschnitt der Meßleitung gemittelten Strömungsgeschwindigkeit des Mediums, d. h. zwischen Meßspannung und Volumenstrom.

Aus der EP 0 555 493 A1 ist ein elektromagnetischer Strömungsmesser zum Messen der Strömungsrate eines Fluids bekannt, das eine Leitung nicht vollständig füllt. Zum Abgriff einer in dem Fluid induzierten Spannung sind flächige Elektroden vorgesehen.

Aus der US 5,307,687 ist ein magnetisch-induktives Durchflußmeßgerät mit stiftförmigen Elektroden bekannt, die innerhalb der Wandung eines Meßrohrs vorgesehen sind. Diese Elektroden treten in galvanisch leitenden Kontakt mit einem durch das Meßrohr strömenden Medium, indem in der Wandung vor den Elektroden jeweils eine Öffnung vorgesehen ist.

In der US 5,280,727 ist ebenfalls ein magnetisch-induktives Durchflußmeßgerät beschrieben. Dabei ist vorgesehen, daß Elektroden in die Wand eines Meßrohrs integriert sind, so daß diese zum kapazitiven Abgriff eines das Meßrohr durchströmenden Mediums verwendet werden können.

Es ist die Aufgabe der Erfindung, ein derartiges magnetisch-induktives Durchflußmeßgerät anzugeben, mit dem auf einfache Weise ein effektiver Abgriff der in dem strömenden Medium induzierten Spannung ermöglicht wird.

Ausgehend von dem eingangs beschriebenen magnetisch-induktiven Durchflußmeßgerät ist die zuvor angegebene Aufgabe durch den Gegenstand des Patentanspruchs 1 gelöst.

Die Grundidee der Erfindung liegt also darin, Elektroden zum Abgreifen der in dem Medium induzierten Spannung vorzusehen, die jedenfalls nicht so angeordnet werden sollen, daß ihre Längserstreckung parallel zur Richtung der induzierten Spannung verläuft. Damit wird erreicht, daß als für das Abgreifen der induzierten Spannung wirksame Fläche im wesentlichen nicht die Stirnfläche einer z. B. stiftförmigen Elektrode, sondern deren Seitenfläche wirkt, so daß eine wesentlich größere effektive Elektrodenfläche zum Abgreifen der induzierten Spannung erzielt wird.

Gemäß einer bevorzugten Weiterbildung der Erfindung ist es insbesondere vorgesehen, daß die Richtung der Längserstreckung der Elektroden senkrecht zur Richtung der induzierten Spannung verläuft oder zumindest nicht stark von einer solchen senkrechten Orientierung abweicht, der Betrag des Winkels zwischen diesen beiden Richtungen also z. B. zwischen 75° und 90° liegt.

Ferner ist es gemäß einer bevorzugten Weiterbildung der Erfindung vorgesehen, daß die Innenwand der Meßleitung aus einem dielektrischen Material hergestellt ist, wobei vorzugsweise die gesamte Meßleitung aus einem dielektrischen Material besteht. Ferner kann es gemäß einer bevorzugten Weiterbildung der Erfindung vorgesehen sein, daß die Innenwand der Meßleitung mit einer dielektrischen Beschichtung versehen ist. Gemäß einer bevorzugten Weiterbildung der Erfindung sind dann in der dielektrischen Innenwand der Meßleitung bzw. in der Beschichtung zwei jeweils einer Elektrode entsprechende Aufnahmen vorgesehen, wobei die Elektroden derart in den Aufnahmen angeordnet sind, daß sie mit dem strömenden Medium in benetzenden Kontakt kommen und dabei mittels Preßpassung in der jeweiligen Aufnahme gehalten werden. Diese Ausgestaltung hat den Vorteil, daß keine weiteren Einrichtungen vorgesehen bzw. Maßnahmen ergriffen werden müssen, um die Elektroden zu fixieren. Darüber hinaus kann eine derartige Konstruktion selbstabdichtend sein, so daß auch keine zusätzlichen Dichtungen erforderlich sind. Alternativ zu dieser bevorzugten Weiterbildung der Erfindung sind weitere verschiedene Befestigungs- und Abdichtungsmöglichkeiten im Rahmen der Erfindung möglich, zur Halterung der Elektroden nämlich das jeweilige Vorsehen eines Sicherungsrings, zum Abdichten der Elektroden das jeweilige Vorsehen einer O-Ring-Dichtung, das Einkleben der Elektroden in die Beschichtung auf der Innenwand der Meßleitung und das Versehen der Elektroden mit Widerhaken und/oder Gewinden, um die Elektroden in der Beschichtung zu fixieren.

Grundsätzlich können die Elektroden eine beliebige Form, wie eine rechteckige oder eine quadratische, vorzugsweise mit abgerundeten Kanten, aufweisen. In diesem Zusammenhang ist gemäß einer bevorzugten Weiterbildung der Erfindung vorgesehen, daß die Elektroden im wesentlichen stiftförmig ausgebildet sind. Weiterhin ist gemäß einer bevorzugten Weiterbildung der Erfindung vorgesehen, daß die Elektroden wenigstens abschnittsweise einen runden oder ovalen Querschnitt aufweisen. In diesem Zusammenhang wird darauf hingewiesen, daß ein runder Querschnitt günstig und einfach herstellbar ist, während ein nicht runder Querschnitt als Verdrehsicherung für die Elektroden einsetzbar ist. Gemäß einer bevorzugten Weiterbildung der Erfindung können die Elektroden auch plattenförmig sein. Das bedeutet, daß der Querschnitt in der Ebene senkrecht zur Längserstreckung der Elektroden rechteckig ist, wobei die Seitenlänge des Rechtsecks in Durchflußrichtung wesentlich länger ist als senkrecht dazu.

Gemäß einer bevorzugten Weiterbildung der Erfindung ist ferner vorgesehen, daß die Elektroden eine sich über deren Längserstreckung ändernde Querschnittsform aufweisen. Insbesondere kann nämlich vorgesehen sein, daß die Elektroden in ihren Endbereichen im wesentlichen kreisförmig sind, während der mittlere Bereich der Elektroden, der in benetzendem Kontakt mit dem durch die Meßleitung strömenden Medium kommt, halbkreisförmig ist, nämlich derart, daß dem Medium eine ebene Fläche der Elektrode zugewandt ist. Auf diese Weise ist z. B. eine Material- und Gewichtsersparnis erzielbar.

Die Elektroden des erfindungsgemäßen magnetisch-induktiven Durchflußmeßgeräts, wie zuvor beschrieben, sind grundsätzlich für alle Querschnittsformen der Meßleitung einsetzbar. Gemäß einer bevorzugten Weiterbildung der Erfindung ist jedoch vorgesehen, daß die Meßleitung im Bereich der Elektroden im Querschnitt nicht rund, vorzugsweise im wesentlichen rechteckförmig ist, die Elektroden im Bereich der Seitenwände der Meßleitung angeordnet sind und die Elektroden sich über im wesentlichen die gesamte Höhe der Seitenwände erstrecken. Dabei ist gemäß einer bevorzugten Weiterbildung der Erfindung ferner vorgesehen, daß die Seitenwände von den kurzen Seiten des Rechtecks gebildet werden. In diesem Zusammenhang sei darauf hingewiesen, daß im Rahmen der vorliegenden Erfindung als eine im wesentlichen rechteckförmige Form auch eine derartige Form verstanden wird, die nicht von geraden Linien gebildet wird, bei der die Eckpunkte des "Rechtecks" also von gekrümmten, z. B. konkav oder konvex verlaufenden Linien verbunden sind. Ferner muß es sich bei den Eckpunkten nicht um "echte Ecken" handeln; diese können vielmehr durch gekrümmte Linien gebildet sein.

Grundsätzlich ist es möglich, die Elektroden in unbeschichtetem Zustand zu verwenden. Gemäß einer bevorzugten Weiterbildung der Erfindung ist jedoch vorgesehen, daß die Elektroden teilweise mit einer Isolierung beschichtet sind. Auf diese Weise kann z. B. genau definiert werden, welcher Anteil der Elektrode mit dem durch die Meßleitung fließenden Medium in benetzenden Kontakt kommen soll. Darüber hinaus kann auf diese Weise vermieden werden, daß z. B. bei der Anlage einer Elektrode an einer Seitenwand der Meßleitung unkontrolliert Gas, wie Luft, oder Verschmutzungen zwischen Elektrode und Seitenwand gelangen, was z. B. zu einer Störung der Messung durch erhöhtes Rauschen führen kann.

Diesem Problem kann gemäß einer bevorzugten Ausführungsform der Erfindung alternativ auch dadurch begegnet werden, daß die Elektroden derart angeordnet werden, daß die Außenflächen der Elektroden im wesentlichen vollständig von dem strömenden Medium umströmt werden. Insbesondere werden die Elektroden dazu jeweils wenigstens teilweise im Abstand zu der entsprechenden Seitenwand angeordnet.

Erfindungsgemäß sind in der Wand der Meßleitung von außerhalb der Meßleitung zugängliche Einführungsöffnungen für die Elektroden vorgesehen, durch die hindurch Elektroden entnommen bzw. eingesetzt werden können. Dies hat den Vorteil, daß grundsätzlich ein Austausch von Elektroden möglich ist, ohne das magnetisch-induktive Durchflußmeßgerät aus dem Rohrleitungssystem auszubauen, in das es zur Durchflußmessung eingebaut ist. Erfindungsgemäß ist ferner vorgesehen, daß für jede Elektrode jeweils zwei von außerhalb der Meßleitung zugängliche Einführungsöffnungen vorgesehen sind, so daß die Elektroden mit ihren beiden Enden jeweils in einer der Einfiihrungsöffnungen angeordnet sind. Damit wird der Vorteil erzielt, daß die Elektroden nicht so fest eingeklemmt bzw. gesichert werden müssen, da auf die Elektroden durch das Medium in der Meßleitung kein Druck ausgeübt wird, der die Elektrode aus einer Öffnung herausdrücken könnte. Entsprechendes kann auch erreicht werden, indem bei Vorsehen von jeweils nur einer einzigen von außerhalb der Meßleitung zugänglichen Einführungsöffnung das bei eingeführter Elektrode von dieser Einführungsöffnung entfernte Ende der Elektrode plan an einer Wand der Meßleitung anliegt oder auf Passung in eine Öffnung in der Wand der Meßleitung hineingeführt ist. Alternativ dazu können die Elektroden fest in die Beschichtung auf der Innenwand der Meßleitung eingebettet sein.

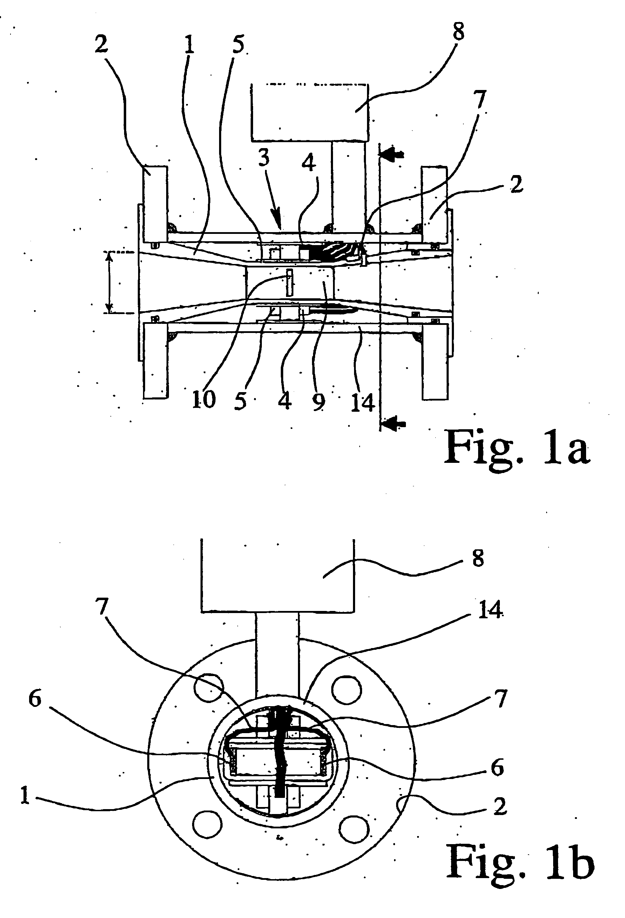

Im einzelnen gibt es nun eine Vielzahl von Möglichkeiten, das erfindungsgemäße magnetisch-induktive Durchflußmeßgerät auszugestalten und weiterzubilden. Dazu wird auf die dem Patentanspruch 1 nachgeordneten Patentansprüche sowie auf die nachfolgende detaillierte Beschreibung unter Bezugnahme auf die Zeichnung verwiesen. In der Zeichnung zeigt
- Fig. 1 a: ein magnetisch-induktives Durchflußmeßgerät schematisch im Längsschnitt,
- Fig. 1 b: das magnetisch-induktive Durchflußmeßgerät schematisch im Querschnitt,
- Fig. 2 a, b und c: verschiedene Möglichkeiten für die Ausgestaltung und Anbringung einer Elektrode und
- Fig. 3: schematisch mögliche Querschnittsformen für die Meßleitung im Bereich der Anbringung der Elektroden.

Aus Fig. 1 a ist ein magnetisch-induktives Durchflußmeßgerät schematisch im Längsschnitt ersichtlich. Das magnetisch-induktive Durchflußmeßgerät weist eine Meßleitung 1 auf, die an ihren beiden Enden jeweils mit einem Flansch 2 versehen ist, um einen Einbau des magnetisch-induktiven Durchflußmeßgeräts in ein nicht weiter dargestelltes Rohrleitungssystem zu ermöglichen. Weiterhin ist eine Magnetfeldeinrichtung 3 vorgesehen, die zwei Magnetspulen 4 sowie Polbleche 5 umfaßt. Mit der Magnetfeldeinrichtung 3 wird ein Magnetfeld erzeugt, das das Meßrohr senkrecht zur durch die Längsrichtung der Meßleitung 1 gegebenen Durchflußrichtung durchsetzt.

Zum Abgriff einer in dem durch die Meßleitung 1 strömenden Medium induzierten Spannung sind zwei einander gegenüberliegende Elektroden 6 vorgesehen, wobei die mittels der Elektroden 6 abgegriffene Spannung über Leitungen 7 einer Auswerteeinrichtung 8 zugeführt wird. Während der Schnitt durch das magnetisch-induktive Durchflußmeßgerät gemäß dem bevorzugten Ausführungsbeispiel der Erfindung aus Fig. 1 b die Elektroden 6 selbst zeigt, ist aus Fig. 1 a ersichtlich, daß die Innenwand der Meßleitung 1 im Bereich des Magnetfelds mit einer dielektrischen Beschichtung 9 versehen ist, in der jeweils einer Elektrode 6 entsprechende Aufnahmen 10 vorgesehen sind. In diesen Aufnahmen 10 werden nun die Elektroden 6 angeordnet, wobei die Elektroden 6 vorliegend stiftförmig und im Querschnitt kreisförmig ausgebildet sind und dabei eine derartige Orientierung aufweisen, daß ihre Längserstreckung parallel zum Magnetfeld und senkrecht zur Durchflußrichtung des strömenden Mediums sowie senkrecht zur Richtung der in dem Medium induzierten Spannung verläuft.

Auf diese Weise wirkt die gesamte, von dem durch die Meßleitung 1 strömenden Medium benetzte Seitenfläche einer Elektrode 6 als für den Abgriff der in dem Medium induzierten Spannung wirksame Fläche. Im Vergleich damit könnte beim Vorsehen einer derartigen Elektrode bei einem herkömmlichen magnetisch-induktiven Durchflußmeßgerät mit z. B. kreisförmiger Meßleitung, in die die Elektrode z. B. radial eingeführt ist, lediglich die Stirnfläche als wirksame Fläche für den Abgriff der in dem strömenden Medium induzierten Spannung wirken. Damit wird auf einfache Weise ersichtlich, wie es ermöglicht wird, eine relativ große Elektrodenfläche zur Verfügung zu stellen, ohne eine entsprechend große Öffnung in der Wand der Meßleitung zur Zuführung der Elektrode 6 von außen bereitstellen zu müssen: Maßgeblich für die Größe der Öffnung für die Einführung der Elektrode 6 ist vorliegend nämlich lediglich der Querschnitt ihrer Stirnfläche bzw. der größte Querschnitt längs der Elektrode 6, während als Fläche zum Abgriff der induzierten Spannung eine Seitenfläche der Elektrode 6 genutzt werden kann.

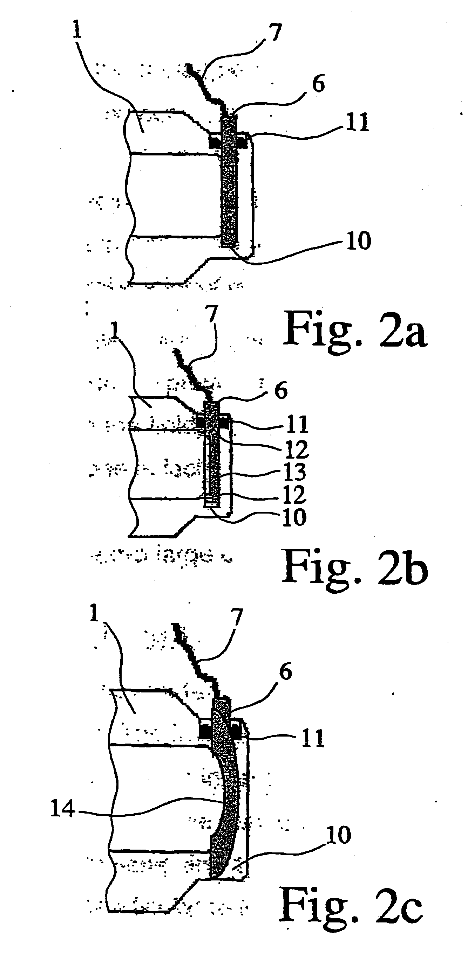

Dies wird insbesondere auch aus den Fig. 2 a, b und c ersichtlich, die verschiedene Möglichkeiten zeigen, eine Elektrode 6 auszugestalten, von außen in die Meßleitung 1 einzuführen und dann in abdichtender Weise in der Meßleitung 1 zu fixieren. Aus Fig. 2 a ist wiederum eine stiftförmig, im Querschnitt kreisförmige Elektrode 6 ersichtlich, die von oben in die im wesentlichen rechteckförmige Meßleitung 1 eingeführt ist. Dazu ist in der Meßleitung 1 eine schon angesprochene Aufnahme 10 vorgesehen, die die Elektrode 6 örtlich fixiert. Die Abdichtung des Inneren der Meßleitung 1 gegenüber der Umgebung wird durch eine O-Ring-Dichtung 11 übernommen.

Fig. 2 b zeigt eine entsprechende Anordnung, wobei jedoch eine derartige Elektrode 6 vorgesehen ist, die nur in ihren Endbereichen 12 kreisförmig ist, in ihrem mittleren Bereich 13 jedoch, in dem sie mit dem strömenden Medium in benetzendem Kontakt steht, halbkreisförmig. Dabei gilt ganz allgemein, daß es mittels eines sich entlang der Längserstreckung der Elektrode 6 ändernden Querschnitts möglich ist, die für den Abgriff der in dem Medium induzierten Spannung wirksame Fläche der Elektrode 6 individuell an die jeweiligen Bedürfnisse anzupassen.

Aus Fig. 2 c ist schließlich eine derartige Konstruktion einer Elektrode 6 ersichtlich, die eine konkave, dem Medium zugewandte Fläche 14 aufweist Eine derartigen Flächenform kann z. B. unter dem Gesichtspunkt einer möglichst geringen Störung des Strömungsprofils des durch die Meßleitung 1 fließenden Mediums vorteilhaft sein.

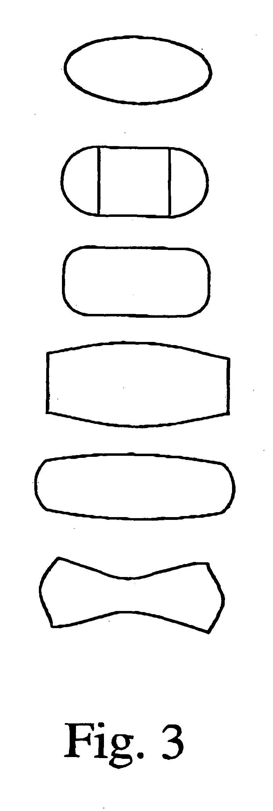

Zuvor ist davon gesprochen worden, daß die Meßleitung 1 in dem Bereich, in dem sie von dem Magnetfeld durchsetzt wird, eine im wesentlichen rechteckförmige Form aufweist. Darüber hinaus ist schon darauf hingewiesen worden, daß der Begriff "rechteckförmig" vorliegend sehr weit verstanden wird, nämlich auch im wesentlichen ovale Formen, Formen mit abgerundeten Ecken und Formen, bei denen die Ecken mit gekrümmten Linien verbunden sind, umfassen soll. Rein beispielhaft sind nun in Fig. 3 derartige Querschnittsformen dargestellt, wie sie für die Meßleitung 1 im Bereich des Magnetfelds verwendet werden können. Dabei ist bevorzugt, daß, wie auch Fig. 1 a entnehmbar, bei dem magnetisch-induktiven Durchflußmeßgerät ein Übergang von einem im wesentlichen kreisförmigen Querschnitt der Meßleitung 1 im Bereich der Flansche 2 auf einen im wesentlichen rechteckförmigen Querschnitt der Meßleitung 1 im Bereich des Magnetfelds, wie z. B. aus Fig. 3 ersichtlich, erfolgt. Das heißt, das eine deutliche Querschnittsverringerung der Meßleitung 1 in Richtung senkrecht zur Richtung der induzierten Spannung vorgesehen ist, während die Querschnittsverringerung der Meßleitung 1 in Richtung der induzierten Spannung eher gering ist.

Eine derartige Form der Meßleitung 1 kann insofern vorteilhaft sein, als daß es weniger leicht zu Ablagerungen auf der Innenwand der Meßleitung 1 kommt. Ferner kann auf diese Weise der Abstand der beiden, einander gegenüberliegenden Magnetspulen 4 verringert werden, so daß ein betragsmäßig größeres Magnetfeld erzeugbar ist. Dabei ist der Abstand zwischen den Elektroden 6 gegenüber einer Konstruktion ohne Querschnittsverringerung kaum kleiner, so daß eine hohe Sensitivität aufrechterhalten werden kann. Weiterhin gilt auch, daß die in Rede stehende im wesentlichen rechteckförmige Querschnittsverringerung hilft, das Strömungsprofil zu glätten. Schließlich hat diese Konstruktion noch den Vorteil, daß mehr Raum für die Anordnung der Magnetfeldeinrichtung 3 zur Verfügung steht, so daß die Meßleitung 1 zusammen mit der Magnetfeldeinrichtung 3 in einem Außenrohr 14 untergebracht werden kann, dessen Innendurchmesser nur unwesentlich größer als der Außendurchmesser der Meßleitung 1 in ihren Endbereichen ist.

## Patentansprüche

1. Magnetisch-induktives Durchflußmeßgerät, mit einer Meßleitung (1), einer Magnetfeldeinrichtung (3) zur Erzeugung und Führung eines die Meßleitung (1) wenigstens teilweise durchsetzenden Magnetfelds und zwei Elektroden (6) zum Abgriff einer in einem die Meßleitung (1) durchfließenden Medium induzierten Spannung, wobei die Elektroden (6) derart angeordnet sind, daß die Richtungen ihrer Längserstreckungen in einem von Null verschiedenen Winkel gegenüber der Richtung der induzierten Spannung verlaufen, **dadurch gekennzeichnet, daß** in der Wand der Meßleitung (1) von außerhalb der Meßleitung (1) zugängliche Einführungsöffnungen für die Elektroden (6) vorgesehen sind, durch die hindurch Elektroden (6) entnommen bzw, eingesetzt werden können und daß für jede Elektrode (6) jeweils zwei von außerhalb der Meßleitung (1) zugängliche Einführungsöffungen vorgesehen sind, so daß die Elektroden (6) mit ihren beiden Enden jeweils in einer der Einführungsöffnungen angeordnet sind.

2. Magnetisch-induktives Durchflußmeßgerät nach Anspruch 1, **dadurch gekennzeichnet, daß** die Richtung der Längserstreckung der Elektroden (6) senkrecht zur Richtung der induzierten Spannung verläuft, der Betrag des Winkels zwischen diesen beiden Richtungen vorzugsweise zwischen 75° und 90° liegt.

3. Magnetisch-induktives Durchflußmeßgerät nach Anspruch 1 oder 2, **dadurch gekennzeichnet, daß** die Innenwand der Meßleitung (1) aus einem dielektrischen Material gebildet oder mit einer dielektrischen Beschichtung (9) versehen ist, in der Innenwand bzw. in der dielektrischen Beschichtung (9) zwei, jeweils einer Elektrode (6) entsprechende Aufnahmen (10) vorgesehen sind und die Elektroden (6) derart in den Aufnahmen (10) angeordnet sind, daß sie in benetzendem Kontakt mit dem strömenden Medium kommen und dabei mittels Preßpassung in der jeweiligen Aufnahme (10) gehalten werden.

4. Magnetisch-induktives Durchflußmeßgerät nach einem der Ansprüche 1 bis 3, **dadurch gekennzeichnet, daß** die Elektroden (6) im wesentlichen plattenförmig oder stiftförmig ausgebildet sind.

5. Magnetisch-induktives Durchflußmeßgerät nach einem der Ansprüche 1 bis 4, **dadurch gekennzeichnet, daß** die Meßleitung (1) im Bereich der Elektroden (6) im Querschnitt im wesentlichen rechteckförmig ist, die Elektroden (6) im Bereich der Seitenwänden der Meßleitung (1) angeordnet sind und die Elektroden (6) sich über im wesentlichen die gesamte Höhe der Seitenwände erstrecken.

6. Magnetisch-induktives Durchflußmeßgerät nach einem der Ansprüche 1 bis 5, **dadurch gekennzeichnet, daß** die Elektroden (6) teilweise mit einer Isolierung beschichtet sind.

7. Magnetisch-induktives Durchflußmeßgerät nach einem der Ansprüche 1 bis 6, **dadurch gekennzeichnet, daß** die seitlichen Außenflächen der Elektroden (6) im wesentlichen vollständig von dem strömenden Medium benetzt werden.

## Claims

1. A magnetic inductive flow meter comprising a measuring line (1), a magnetic field device (3) for generating and guiding a magnetic field, which at least partially penetrates the measuring line (1) and two electrodes (6) for tapping a voltage induced in a medium, which flows through the measuring line (1), wherein the electrodes (6) are arranged in such a manner that the directions of their longitudinal extensions run at an angle, which is not equal to zero as compared to the direction of the induced voltage, **characterized in that** provision is made in the wall of the measuring line (1) for insertion openings for the electrodes (6), which can be accessed from outside of the measuring line (1), through which electrodes (6) can be withdrawn and inserted, respectively, and **in that** for each electrode (6) provision is made in each case for two insertion openings, which can be accessed from outside of the measuring line (1) so that both of the ends of the electrodes (6) are in each case arranged in one of the insertion openings.

2. The magnetic inductive flow meter according to claim 1, **characterized in that** the direction of the longitudinal extension of the electrodes (6) runs at right angles to the direction of the induced voltage, with the magnitude of the angle between these two directions being preferably between 75° and 90°.

3. The magnetic inductive flow meter according to claim 1 or 2, **characterized in that** the inner wall of the measuring line (1) is made of a dielectric material or is provided with a dielectric coating (9), **in that** provision is made for two accommodations (10) in the inner wall and in the dielectric coating (9), respectively, said accommodations (10) in each corresponding to an electrode (6) and **in that** the electrodes (6) are arranged in the accommodations (10) in such a manner that they come into a wetting contact with the flowing medium and are thereby held in the respective accommodation (10) by means of a press fit.

4. The magnetic inductive flow meter according to one of claims 1 to 3, **characterized in that** the electrodes (6) are embodied so as to be substantially plate-shaped or pin-shaped.

5. The magnetic inductive flow meter according to one of claims 1 to 4, **characterized in that** the cross section of the measuring line (1) is substantially rectangular in the region of the electrodes (6), the electrodes (6) being arranged in the region of the side walls of the measuring line (1) and the electrodes (6) extending across substantially the entire height of the side walls.

6. The magnetic inductive flow meter according to one of claims 1 to 5, **characterized in that** the electrodes (6) are partially coated with an insulation.

7. The magnetic inductive flow meter according to one of claims 1 to 6, **characterized in that** the lateral outer surfaces of the electrodes (6) are substantially completely wetted by the flowing medium.

## Revendications

1. Débitmètre magnéto-inductif, avec un conduit de mesure (1), un dispositif à champ magnétique (3) pour générer et pour guider un champ magnétique traversant au moins partiellement le conduit de mesure (1) et avec deux électrodes (6) pour prélever une tension induite dans un milieu circulant à travers le conduit de mesure (1), les électrodes (6) étant disposées de sorte que les directions de leurs extensions longitudinales s'écoulent sous un angle différent de zéro par rapport à la direction de la tension induite, **caractérisé en ce que** dans la paroi du conduit de mesure (1) sont prévus des orifices d'introduction accessibles pour les électrodes (6) à travers lesquels il est possible de retirer ou d'insérer des électrodes (6) et **en ce que** pour chaque électrode (6) sont prévus respectivement deux orifices d'introduction accessibles à partir de l'extérieur du conduit de mesure (1), de sorte que les électrodes (6) soient disposées respectivement avec leurs deux extrémités dans l'un des orifices d'introduction.

2. Débitmètre magnéto-inductif selon la revendication 1, **caractérisé en ce que** la direction de l'extension longitudinale des électrodes (6) s'écoule à la perpendiculaire de la direction de la tension induite, et **en ce que** la valeur de l'angle entre ces deux directions se situe de préférence entre 75° et 90°.

3. Débitmètre magnéto-inductif selon la revendication 1 ou 2, **caractérisé en ce que** la paroi intérieure du conduit de mesure (1) est formée dans une matière diélectrique ou est munie d'un revêtement diélectrique (9), **en ce que** dans la paroi intérieure, respectivement dans le revêtement diélectrique (9) sont prévus deux logements (10) correspondant chacun à une électrode (6) et **en ce que** les électrodes (6) sont disposées dans les logements (10) de sorte à entrer en contact humidifiant avec le milieu circulant et à être maintenues à cet effet au moyen d'un ajustage serré dans le logement (10) concerné.

4. Débitmètre magnéto-inductif selon l'une quelconque des revendications 1 à 3, **caractérisé en ce que** les électrodes (6) sont conçues sensiblement sous forme de plaques ou de tiges.

5. Débitmètre magnéto-inductif selon l'une quelconque des revendications 1 à 4, **caractérisé en ce que** dans la région des électrodes (6), le conduit de mesure (1) a une section transversale sensiblement rectangulaire, **en ce que** les électrodes (6) sont disposées dans la région des parois latérales du conduit de mesure (1) et **en ce que** les électrodes (6) s'étendent sensiblement sur toute la hauteur des parois latérales.

6. Débitmètre magnéto-inductif selon l'une quelconque des revendications 1 à 5, **caractérisé en ce que** les électrodes (6) sont partiellement revêtues d'une isolation.

7. Débitmètre magnéto-inductif selon l'une quelconque des revendications 1 à 6, **caractérisé en ce que** les surfaces extérieures latérales des électrodes (6) sont sensiblement humidifiées totalement par le milieu circulant.
